# EUROPÄISCHE PATENTSCHRIFT

(11) **EP 0 537 520 B1**
(45) Veröffentlichungstag und Bekanntmachung des Hinweises auf die Patenterteilung: **05.07.1995**
(21) Anmeldenummer: 92116320.0
(22) Anmeldetag: 24.09.1992
(51) Int. Cl.: B01D 35/02, F02M 37/22

(54) **Flüssigkeitsfilter**
Liquid filter
Filtre pour un liquide

(30) Priorität: 17.10.1991 DE 4134368
(43) Veröffentlichungstag der Anmeldung: 21.04.1993
(73) Patentinhaber: ROBERT BOSCH GMBH, 70442 Stuttgart (DE)
(72) Erfinder: Straubel, Max, Dr. Dipl.-Ing., W-7000 Stuttgart 61 (DE); Boehringer, Wilfried, W-7128 Lauffen a.N. (DE); Projahn, Ulrich, Dr. Dipl.-Ing., W-7257 Ditzingen 4 (DE)

(56) Entgegenhaltungen:
- WO-A-83/01580
- US-A- 3 753 544

## Beschreibung

### Stand der Technik

Die Erfindung geht aus von einem Flüssigkeitsfilter nach der im Oberbegriff des Anspruchs 1 näher angegebenen Gattung.

Es ist schon ein solches Flüssigkeitsfilter zum Reinigen von Dieselkraftstoff aus der DE-A-33 12 613 bekannt, das insbesondere beim Aufprall von Fahrzeugen besondere Sicherheitsbedingungen erfüllt. Vor allem soll das Flüssigkeitsfilter unter verschärften Crash-Bedingungen auch bei mechanisch starker Verformung noch dicht sein. Das vorbekannte Flüssigkeitsfilter weist zu diesem Zweck einen Edelstahl-Deckel auf, der an seinem äußeren Rand mit einem becherförmigen Gehäuseteil aus einem vorbehandelten Tiefziehblech verschweißt ist. Zudem sind in den Edelstahl-Deckel die Rohrstutzen aus Edelstahl zum Anschluß von Schlauchleitungen für Zulauf und Ablauf eingelötet. Diese Bauweise des Flüssigkeitsfilters ist relativ aufwendig und dementsprechend kostspielig. Auch ist bei diesem Filter das Mittelrohr des Wickeleinsatzes über einen Flachtdichtring am Deckel abgestützt, was insbesondere bei Gehäuseverformungen leicht zu Undichtheiten zwischen Schmutz- und Reinseite führen kann.

### Vorteile der Erfindung

Das erfindungsgemäße Flüssigkeitsfilter mit den kennzeichnenden Merkmalen des Hauptanspruchs hat demgegenüber den Vorteil, daß es eine relativ einfach und kostengünstig bauende Anschlußtechnik zum Anschluß der Rohre für Zulauf und Ablauf und auch des Filtereinsatzes erlaubt. Diese Anschlußtechnik ist universell einsetzbar, da sie sich für verschiedene Filterbauarten eignet und erfüllt hohe Sicherheitsanforderungen. Da diese Anschlußtechnik in gewissen Grenzen elastisch ausgebildet ist, ist sie relativ unempfindlich gegen Stöße und kann sich insbesondere im Crash-Test gut bewähren. Zum Anschluß lassen sich einfache glatte Rohre verwenden, wobei die Anforderungen an die Oberflächenrauheit nicht hoch sind. Diese Anschlußtechnik baut platzsparend, kostengünstig und auch montagefreundlich.

Durch die in den Unteransprüchen aufgeführten Maßnahmen sind vorteilhafte Weiterbildungen und Verbesserungen des im Hauptanspruch angegebenen Flüssigkeitsfilters möglich. Besonders vorteilhaft ist eine Ausbildung des Anschlußstutzens nach den Ansprüchen 2 und 3, wodurch er neben einer ausreichenden Festigkeit und Formstabilität eine solche Weichheit bzw. Elastizität aufweist, daß eine Ausbildung der Befestigungs- und Dichtstellen in möglichst stoßunempfindlicher Weise möglich ist. Zweckmäßig sind ferner Ausbildungen nach den Ansprüchen 4 bis 7, wodurch eine besonders einfache und kompakte Bauweise unterstützt wird. Günstig ist es ferner, wenn gemäß Anspruch 8 der Deckel am Anschlußstutzen befestigt wird, wodurch eine relativ sichere, elastische, dichte und einfache Verbindung erreicht wird. Ferner ist es zweckmäßig, wenn gemäß Anspruch 11 in den Anschlußstutzen die Rohre für Zulauf und Ablauf eingesetzt werden, so daß durch eine erhöhte Vorspannung eine verstärkte Dichtwirkung und ein besserer Zusammenhalt der Bauelemente erreicht wird. Besonders vorteilhaft sind ferner Ausbildungen nach den Ansprüchen 13 bis 15, da sich die erfindungsgemäße Anschlußtechnik besonders gut zum Einbau einer elastischen Schutzhülle im Innern des Gehäuses um den Filtereinsatz herum eignet, um auf diese Weise hohe Anforderungen bei einem Crash-Test zu erfüllen. Weitere vorteilhafte Ausgestaltungen ergeben sich aus den übrigen Ansprüchen, der Beschreibung sowie der Zeichnung.

### Zeichnung

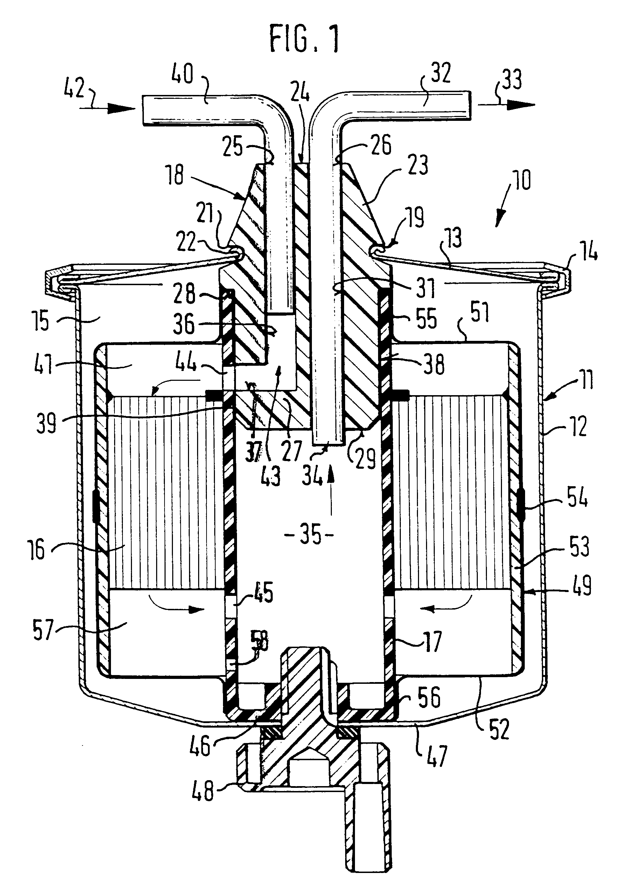

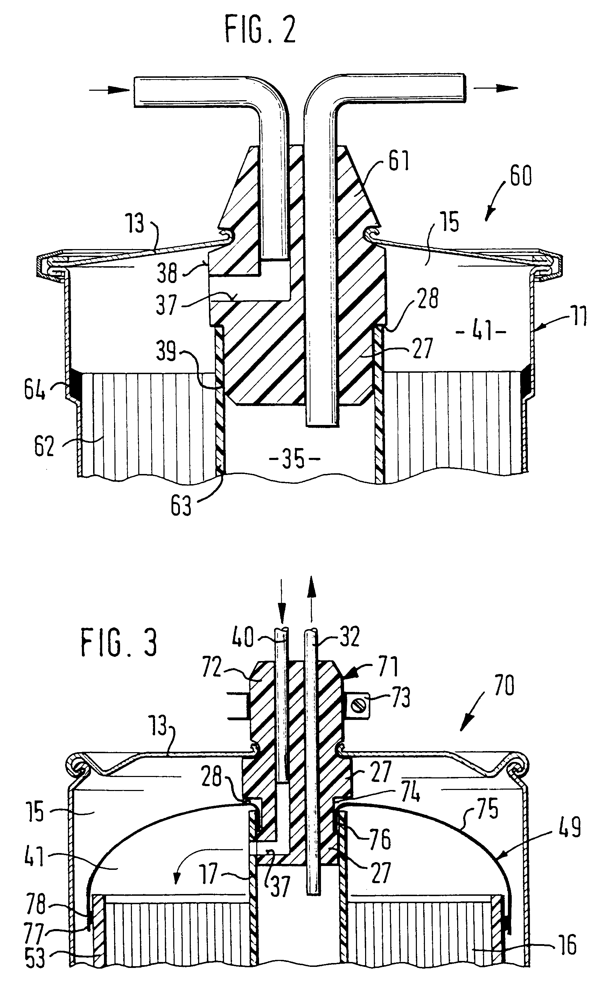

Vier Ausführungsbeispiele der Erfindung sind in der Zeichnung dargestellt und in der nachfolgenden Beschreibung näher erläutert. Es zeigen Figur 1 einen Längsschnitt durch ein erstes Ausführungsbeispiel eines Flüssigkeitsfilters in vereinfachter Darstellung und die Figuren 2 bis 4 jeweils einen teilweisen Längsschnitt durch ein zweites bis viertes Ausführungsbeispiel des Filters.

### Beschreibung der Ausführungsbeispiele

Die Figur 1 zeigt einen Längsschnitt durch ein Flüssigkeitsfilter 10 in vereinfachter Darstellung, das zum Reinigen von Kraftstoff, insbesondere Dieselkraftstoff, dient. Das Flüssigkeitsfilter 10 hat ein Gehäuse 11, an dessem becherförmigen Gehäuseteil 12 ein Deckel 13 mit Hilfe eines lösbaren Spannrings 14 dicht und fest befestigt ist. Das Gehäuse 11 nimmt in seinem Innenraum 15 als Filtereinsatz ein Wickelelement 16 auf, das mit Hilfe seines Mittelrohres 17 an einem Anschlußstopfen 18 angeschlossen ist.

Der Anschlußstopfen 18 besteht aus einem weichen Gummi, der trotz seiner ausreichenden Formstabilität eine genügend große Elastizität aufweist, um gegen Stöße von außen möglichst unempfindlich zu sein. Der Anschlußstopfen 18 aus Gummi weist an seinem Außenumfang eine Ringnut 19 auf, in die der Deckel 13 mit seinem an einer zentralen Öffnung 21 gelegenen, umgebogenen Rand 22 eingesetzt ist. Die Durchmesser von Ringnut 19 und Öffnung 21 sind so aufeinander abgestimmt, daß der Anschlußstopfen 18 den Innenraum 15 des Gehäuses 11 nach außen einwandfrei abdichtet und der Anschlußstopfen 18 fest und doch elastisch im Deckel befestigt ist. Der Anschlußstopfen 18 hat außerhalb des Gehäuses 11 einen konischen Abschnitt 23, der durch eine Stirnseite 24 mit zwei Öffnungen 25 bzw. 26 für einen Zulauf und einen Ablauf begrenzt ist.

Der Anschlußstopfen 18 ragt vom Deckel 13 aus mit einem im wesentlichen zylindrischen Abschnitt 27 in den Innenraum 15 hinein, wobei am zylindrischen Abschnitt 27 eine Schulter 28 zum Anschlag des Mittelrohrs 17 ausgebildet ist. Der zylindrische Abschnitt 27 wird von einer innenliegenden Stirnfläche 29 begrenzt, von der eine durchgehende, parallel zur Längsachse des Filters 10 verlaufende Bohrung 31 zur ablaufseitigen Öffnung 26 in der ersten Stirnseite 24 führt. In diese Bohrung 31 ist ein den Anschußstopfen 18 vollkommen durchdringender Rohrstutzen 32 eingeschoben, welcher einen dem Ablauf 33 zugeordneten Kanal 34 bildet, welcher eine Reinseite 35 des Wickelelements 16 mit dem Ablauf 33 verbindet.

In dem Anschlußstopfen 18 verläuft ausgehend von der zulaufseitigen Öffnung 25 parallel zur Bohrung 31 eine sacklochartige Bohrung 36, von der eine Radialbohrung 37 in die Mantelfläche 38 des zylindrischen Abschnitts 27 führt. Die Radialbohrung 37 mündet dabei in einem Bereich der Mantelfläche 38, in dem das auf dem zylindrischen Abschnitt 27 aufgeschobene Mittelrohr 17 dicht und fest anliegt und somit nach beiden Seiten der Radialbohrung 37 Dichtstellen bildet. Dabei liegt die Dichtstelle 39 zwischen Radialbohrung 37 und innerer Stirnfläche 29 zwischen der Reinseite 35 und einer Schmutzseite 41 im Wickelelement 16. In die sacklochartige Bohrung 36 ist ein Rohrstutzen 40 eingeschoben, welcher dem Zulauf 42 zugeordnet ist und einen zulaufseitigen Kanal 43 bildet, der den Zulauf 42 durch den Anschlußstopfen 18 hindurch mit der Schmutzseite 41 im Wickelelement 16 verbindet. Das Mittelrohr 17 weist zu diesem Zweck eine koaxial zur Radialbohrung 37 liegende Durchgangsöffnung 44 auf. Ferner sind im Mittelrohr 17 unterhalb des eigentlichen Wickels Querbohrungen 45 angeordnet, über welche das aus dem Wickelelement 16 gereinigt austretende Druckmittel in das Innere des Mittelrohrs 17 und weiter zum Ablauf 33 gelangen kann. Das Mittelrohr 17 stützt sich mit seinem unteren, geschlossenen Ende 46 an einem Boden 47 des becherförmigen Gehäuseteils 12 ab und nimmt eine zum Ablassen von Wasser dienende Verschlußschraube 48 auf, welche durch den Boden 47 hindurchgeführt ist.

Von Vorteil ist es wenn die Außendurchmesser von Mittelrohr und Anschlußstopfen im wesentlichen gleich groß sind; sie Können insbesondere das Dreifache des Durchmessers eines Kanals betragen.

Das in das Gehäuse 11 eingebaute Filterelement 16 ist zur Erfüllung von Sicherheitsbedingungen, wie sie insbesondere bei Crash-Tests auftreten, von einer geschlossenen, druckmitteldichten Schutzhülle 49 umgeben, die innerhalb des Gehäuses 11 angeordnet ist. Diese Schutzhülle 49 besteht aus einer extrem reißfesten und flexiblen Folie aus Plastikmaterial, die hier zweiteilig ausgebildet ist und von der die obere Folienhälfte 51 und die untere Folienhälfte 52 an einem Außenrohr 53 des Wickelelements 16 durch eine Klebestelle 54 dicht und fest miteinander verbunden sind. Ferner ist die obere Folienhälfte 51 durch eine obere Klebestelle 55 dicht und fest mit dem Mittelrohr 17 nahe der Schulter 28 verbunden, während die untere Folienhälfte 52 durch eine untere Klebestelle 56 mit dem Ende 46 des Mittelrohrs 17 dicht und fest verbunden ist. Die axiale Länge des Außenrohrs 53 im Wickelelement 16 überragt die axiale Länge des eigentlichen Wickels, so daß auf der Schmutzseite 41 ein ausreichend großer Zulaufraum zur Verfügung steht, während auf der Reinseite 35 die untere Folienhälfte 52 mit dem Mittelrohr 17 und dem Außenrohr 53 einen Wasserspeicherraum 57 begrenzt, der über eine Radialbohrung 58 mit dem Innenraum des Mittelrohrs 17 Verbindung hat.

Bei dem Flüssigkeitsfilter 10 ermöglicht der aus Gummi bestehende Anschlußstopfen 18 eine Anschlußtechnik, die universell einsetzbar ist. Bei der Montage des Flüssigkeitsfilters 10 kann der weiche, elastische Gummistopfen 18 zunächst von unten her in die kreisrunde Öffnung 21 im Deckel 13 eingeknöpft werden, wobei der konische Abschnitt 23 diesen Einbau erleichtert. Durch das Einknöpfen wird eine feste und dichte Verbindung zwischen beiden Bauelementen 18 und 13 erreicht. Von unten her wird dann auf den zylindrischen Abschnitt 27 des Abschlußstopfens 18 das Wickelelement 16 mit seinem Mittelrohr 17 aufgeschoben, wobei der gummiartige Anschlußstopfen 18 in der Mantelfläche 31 eine allseitige Abdichtung für die Radialbohrung 37 bildet. In den Anschlußstopfen 18 können dann von oben her durch die Öffnungen 25 und 26 die glatten Rohrstutzen 40 für den Zulauf 42 sowie Rohrstutzen 32 für den Ablauf 33 in die Bohrungen 36 bzw. 31 eingeschoben werden. Durch das Einschieben der Rohre 40, 32 erhöht sich die Vorspannung in dem Anschlußstopfen 18, wodurch die Abdichtwirkung verbessert wird. Die Baugruppe aus Deckel 13, Anschlußstopfen 18 und Mittelelement 16 wird anschließend in das becherförmige Gehäuseteil 12 eingebaut und der Deckel 13 mit Hilfe des Spannrings 14 dicht befestigt. Der Anschlußstopfen 18 aus weichem Gummi ermöglicht bei dieser Anschlußtechnik in gewissen Grenzen eine Elastizität, welche die Befestigungen und Abdichtungen unempfindlich macht gegen Stöße, so daß sich diese Anschlußtechnik besonders bei den Bedingungen im Crash-Test gut bewährt. Die im Innenraum des Gehäuses 11 angeordnete Schutzhülle 49 umschließt das Wickelelement 16 vollständig in einer druckmitteldichten Weise. Bei den unter Crash-Bedingungen auftretenden Verformungen des Gehäuses 11 ist die Schutzhülle 49 dadurch gegen die zerstörende Einwirkung scharfkantiger Teile von außen her gut geschützt und kann dadurch ihrer Sicherheitsfunktion besser nachkommen, daß nämlich bei verformtem Gehäuse 11 kein Kraftstoff nach außen gelangen kann.

Die Wirkungsweise des Flüssigkeitsfilters 10 ist wie folgt: Der zu reinigende Kraftstoff gelangt vom Zulauf 42 über den Rohrstutzen 40, die Radialbohrung 37 und die Durchgangsöffnung 44 auf die Schmutzseite 41 des Wickelelements 16. Der Kraftstoff tritt aus dem Wickelelement 16 gereinigt nach unten aus, strömt durch die Querbohrungen 45 in das Mittelrohr 17 hinein und gelangt über den ablaufseitigen Kanal 34 durch den Rohrstutzen 32 hindurch zum Ablauf 33. Im Wasserspeicherraum 57 abgeschiedenes Wasser kann über die Radialbohrungen 58 ebenfalls in den Innenraum des Mittelrohrs 17 gelangen und von dort bei Bedarf über die Verschlußschraube 48 abgelassen werden. Da die Folienhälften 51 und 52 das Wickelelement 16 flüssigkeits- und gasdicht umschließen, ist der zwischen Schutzhülle 49 und Gehäuse 11 verbleibende Teil des Innenraums 15 von der Schmutz- (41) und der Reinseite (35) getrennt und ist somit mit Gas bzw. Luft gefüllt.

Die Figur 2 zeigt einen teilweisen Längsschnitt durch ein zweites Flüssigkeitsfilter 60 in vereinfachter Darstellung, das sich vom ersten Flüssigkeitsfilter 10 nach Figur 1 wie folgt unterscheidet, wobei für gleiche Bauelemente gleiche Bezugszeichen verwendet werden.

Das Flüssigkeitsfilter 16 weist in dem Innenraum 15 des Gehäuses 11 keine das Filterelement umschließende Schutzhülle auf, weshalb es einen leicht geänderten Anschlußstopfen 61 sowie ein geändertes Wickelelement 62 aufweist. Durch die fehlende Schutzhülle mündet die Radialbohrung 37 im Anschlußstopfen 61 in die Mantelfläche 38 in einem Bereich, der sich zwischen dem Deckel 13 und dem Mittelrohr 63 des Wickelelements 62 erstreckt. Am Mittelrohr 63 kann daher eine Durchgangsöffnung für den zufließenden Druckmittelstrom entfallen, da der Kraftstoff über die Radialbohrung unmittelbar auf die Schmutzseite 41 im Innenraum 15 strömen kann. Das Wickelelement 62 wird in an sich bekannter Weise in das becherförmige Gehäuseteil 12 eingebaut und durch eine zusätzliche Dichtstelle 64 zwischen Schmutzseite 41 und Reinseite 35 abgedichtet.

Beim Flüssigkeitsfilter 60 läßt sich ebenfalls mit Hilfe des relativ weichen Anschlußstopfens 61 eine Anschlußtechnik für Zulauf und Ablauf einerseits sowie das Wickelelement 62 andererseits realisieren, die in gewissen Grenzen elastisch und daher unempfindlich gegen Stöße ist.

Die Figur 3 zeigt einen teilweisen Längs schnitt durch ein drittes Flüssigkeitsfilter 70 in vereinfachter Ausführung, das sich vom ersten Flüssigkeitsfilter 10 nach Figur 1 wie folgt unterscheidet, wobei für gleiche Bauelemente gleiche Bezugszeichen verwendet werden.

Das Flüssigkeitsfilter 70 weist einen leicht geänderten Anschlußstopfen 71 auf und hat eine geänderte Bauart der Schutzhülle 49. Am Anschlußstutzen 71 ist der vom Deckel 13 nach außen ragende Abschnitt zylindrisch ausgebildet und trägt eine Schlauchklemme 73, welche die in den Anschlußstopfen 71 eingeschobenen Rohrstutsen 40 und 32 gegen Herausziehen absichert. Der vom Deckel 13 aus in den Innenraum 15 ragende zylindrische Abschnitt 27 des Anschlußstopfens 71 weist im Bereich zwischen Anschlagschulter 28 und Radialbohrung 37 eine flache Ringnut 74 auf, in die ein Oberteil 75 der Schutzhülle 49 mit einem auskragenden Innenbund 76 eingesetzt ist.

Durch das auf den zylindrischen Abschnitt 27 aufgeschobene Mittelrohr 17 des Wickelelements 16 wird das Oberteil 75 im Bereich des Innenbundes 76 fest und dicht eingespannt. Das im wesentlichen schalenförmig ausgebildete Oberteil 75 besteht aus einem reißfesten, gegen Kraftstoff beständigen Kunststoff, und läßt sich als relativ elastisches und doch ausreichend formstabiles Formteil herstellen. Das schalenförmige Oberteil 75 ist an seinem Außenbund 77 durch eine Klebestelle 78 dicht und fest mit dem Außenrohr 53 des Wickelelements 16 verbunden. Durch das Oberteil 75 ist somit die Schmutzseite 41 von dem restlichen Teil des Innenraums 15 im Gehäuse 11 abgetrennt. Bei dem Flüssigkeitsfilter 70 bildet das Außenrohr 53 des Wickelelements 16 zugleich einen Teil der Schutzhülle 49. Das Außenrohr 53 kann zu diesem Zweck aus einer imprägnierten Pappe, einer außen beschichteten Pappe oder einem geeigneten Kuntstoff bestehen, so daß es bei den unter Crash-Bedingungen auftretenden Verformungen möglichst unempfindlich gegen Stöße ist und flüssigkeitsdicht bleibt. Die Schutzhülle 49 wird beim dritten Flüssigkeitsfilter 70 durch ein nicht näher gezeichnetes, schalenförmiges Unterteil vervollständigt, das in entsprechender Weise mit seinem Außenbund am Außenrohr 53 dicht und fest verklebt ist und mit seinem inneren Rand an einer zentralen Öffnung im Bereich einer Wasserablaßschraube eingespannt ist.

Die Wirkungsweise des dritten Flüssigkeitsfilters 70 entspricht derjenigen des Flüssigkeitsfilters 10 nach Figur 1. Auch beim dritten Flüssigkeitsfilter 70 ermöglicht der Anschlußstopfen aus Gummi durch seine Weichheit und Nachgiebigkeit bis zu gewissen Grenzen, daß die Anschlußtechnik für Zulauf und Ablauf und den Filtereinsatz unempfindlich gegen Stöße ist und daher Crash-Bedingungen besonders gut standhält.

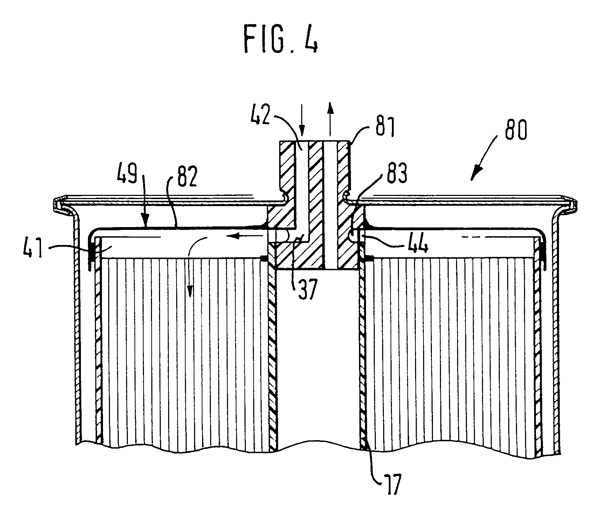

Die Figur 4 zeigt einen teilweisen Längsschnitt durch ein viertes Flüssigkeits£ilter 80 in vereinfachter Darstellung, das sich vom dritten Flüssigkeitsfilter 70 vor allem durch einen anderen Anschlußstopfen 81 unterscheidet, an dem das Oberteil 82 der Schutzhülle 49 unmittelbar am Anschlußstopfen 81 angeformt ist, mit ihm also einstückig ausgebildet ist. Der Anschlußstopfen 81 mit angeformtem Oberteil 82 eignet sich besonders zur Herstellung aus Gummi, das derartige Formgebungen zuläßt. Auf diese Weise kann eine gesonderte Dichtung zwischen Anschlußstopfen und Oberteil der Schutzhülle 49 eingespart werden. Ferner verläuft im Anschlußstopfen 81 die Radialbohrung 37 nach außen hin in eine umlaufende Ringnut 83, der mehrere Durchgangsöffnungen 44 im Mittelrohr 17 zugeordnet sind. Der Durchfluß von Kraftstoff vom Zulauf 42 durch den Anschlußstopfen 81 auf die Schmutzseite 41 wird dadurch verbessert. Der Anschlußstopfen 81 mit integriertem Schutzhüllen-Oberteil 82 ermöglicht eine Anschlußtechnik, die in besonderem Maße gegen Stöße unempfindlich ist und daher Sicherheitsbedingungen bei Crash-Tests erfüllt.

Selbstverständlich sind an den gezeigten Ausführungsformen Änderungen möglich, ohne vom Gedanken der Erfindung abzuweichen. So können die Anschlußstopfen anstelle von Gummimaterial auch aus einem geeigneten Kunststoff hergestellt werden, sofern er neben einer gewissen Festigkeit und Formstabilität auch eine ausreichende Elastizität aufweist, um den gewünschten Anforderungen nachzukommen.

## Patentansprüche

1. Flüssigkeitsfilter, insbesondere zur Reinigung von Kraftstoff, mit einem einen Filtereinsatz aufnehmenden Gehäuse, das aus einem becherförmigen Gehäuseteil und einem Deckel besteht, an dem die Anschlüsse für Zulauf und Ablauf angeordnet sind und bei dem der Filtereinsatz als Wickelelement mit einem Mittelrohr ausgebildet ist, der im Innenraum des Gehäuses zwischen die beiden Anschlüsse geschaltet ist, wobei das Mittelrohr eine Dichtstelle zwischen Schmutz- und Reinseite bildet, dadurch gekennzeichnet, daß im Deckel (13) ein Anschlußstopfen (18, 61, 71, 81) aus elastischem Material angeordnet ist, der nach außen weisende Öffnungen (25, 26) zum Anschluß von Zulauf (42) und Ablauf (33) aufweist und den Innenraum (15) des Gehäuses (11) nach außen abdichtet, daß das Mittelrohr (17, 63) an einen in den Innenraum (15) des Gehäuses (11) ragenden Abschnitt (27) des Anschlußstopfens (18, 61, 71, 81) angeschlossen ist und dabei die Dichtstelle (39) bildet und daß im Anschlußstopfen (18, 61, 71, 81) die beiden Anschlüsse für Zulauf (42) und Ablauf (33) mit der Schmutz- (41) bzw. der Reinseite (35) im Innenraum (15) verbindende Kanäle (43, 34) angeordnet sind.

2. Flüssigkeitsfilter nach Anspruch 1, dadurch gekennzeichnet, daß als elastisches Material für den Anschlußstopfen (18, 61, 71, 81) Gummi verwendet wird.

3. Flüssigkeitsfilter nach Anspruch 1, dadurch gekennzeichnet, daß als elastisches Material für den Anschlußstopfen ein relativ weicher Kunststoff, insbesondere Viton, verwendet wird.

4. Flüssigkeitsfilter nach einem der Ansprüche 1 bis 3, dadurch gekennzeichnet, daß der die Ablauf-Öffnung (26) mit der Reinseite (35) verbindende Kanal (34) als eine beide Stirnseiten (24, 29) des Anschlußstopfens (18, 61, 71, 81) miteinander verbindende, gerade verlaufende Durchgangsbohrung (31) ausgebildet ist.

5. Flüssigkeitsfilter nach einem der Ansprüche 1 bis 4, dadurch gekennzeichnet, daß der die Zulauf-Öffnung (25) mit der Schmutzseite (41) verbindende Kanal (43) im Anschlußstopfen (18, 61, 71, 81) winkelförmig verläuft und insbesondere eine zur Zulauf-Öffnung (25) verlaufende, sacklochartige Längsbohrung (36) und eine im zylindrischen Abschnitt (27) in dessen Mantelfläche (38) verlaufende Radialbohrung (37) aufweist.

6. Flüssigkeitsfilter nach Anspruch 5, dadurch gekennzeichnet, daß die Radialbohrung (37) zwischen der Deckel-Befestigung (19, 21, 22) und der Dichtstelle (39) in die Mantelfläche (38) mündet.

7. Flüssigkeitsfilter nach Anspruch 5 oder 6, dadurch gekennzeichnet, daß die Radialbohrung (37) in eine zur Mantelfläche (38) hin offene Ringnut (83) im zylindrischen Abschnitt (27) verläuft und das Mittelrohr (17) mehrere zugeordnete Durchgangsöffnungen (44) aufweist.

8. Flüssigkeitsfilter nach einem oder mehreren der Ansprüche 1 bis 7, dadurch gekennzeichnet, daß der Anschlußstopfen (18, 61, 71, 81) eine außenliegende Ringnut (19) aufweist, mit der er in eine zentrale Öffnung (21) mit abgerundeten Rand (22) im Deckel (13) eingesetzt ist.

9. Flüssigkeitsfilter nach Anspruch 8, dadurch gekennzeichnet, daß der Anschlußstutzen (18, 61) von der Ringnut (19) zu der die Öffnungen (25, 26) aufweisenden Stirnseite (24) hin konisch verjüngt ausgebildet ist.

10. Flüssigkeitsfilter nach einem der Ansprüche 1 bis 9, dadurch gekennzeichnet, daß der Anschlußstutzen (18, 61, 71, 81) an seinem in den Gehäuse-Innenraum (15) ragenden Abschnitt (27) zylindrisch ausgebildet ist und eine das Mittelrohr (17, 63) abstützende Schulter (28) aufweist.

11. Flüssigkeitsfilter nach einem oder mehreren der Ansprüche 1 bis 10, dadurch gekennzeichnet, daß in die axial verlaufenden Bohrungen (36, 31) des Anschlußstopfens Rohrstutzen (40, 32) eingesetzt sind, die insbesondere den Anschlußstopfen (18, 61, 71) leicht vorspannen.

12. Flüssigkeitsfilter nach einem der Ansprüche 1 bis 11, dadurch gekennzeichnet, daß die Außendurchmesser von Mittelrohr (17, 63) und Anschlußstopfen (18, 61, 71) im wesentlichen gleich groß sind und insbesondere mindestens das Dreifache des Durchmessers eines Kanals (43, 34) betragen.

13. Flüssigkeitsfilter nach einem der Ansprüche 5 bis 12, dadurch gekennzeichnet, daß die Radialbohrung (37) im Anschlußstopfen (18, 71, 81) innerhalb des Mittelrohres (17) angeordnet ist und das Mittelrohr (17) einen zugeordneten Durchlaß (44) zur Schmutzseite (41) aufweist und daß im Innenraum (15) eine den Wickeleinsatz (15) bei Crash-Bedingungen schützende, ihn druckmitteldicht umgebende Schutzhülle (49) angeordnet ist, die am zylindrischen Abschnitt (27) des Anschlußstopfens (18, 71, 81) im Bereich zwischen Deckel (13) und Radialbohrung (37) dicht befestigt ist.

14. Flüssigkeitsfilter nach Anspruch 13, dadurch gekennzeichnet, daß die Schutzhülle (49) aus einem reißfesten, flexiblen, folienartigen Plastikmaterial besteht und durch Klebung, Schweißung oder Einspannung dicht und fest am Mittelrohr (17) befestigt ist.

15. Flüssigkeitsfilter nach Anspruch 13, dadurch gekennzeichnet, daß die Schutzhülle (49) ein Oberteil (82) aufweist, das ein mit dem Anschlußstopfen (81) einstückig ausgebildetes, integrales Teil bildet, das kappenförmig das Wickelelement (16) übergreift und mit seinem äußeren Rand dicht und fest an einem Außenrohr (53) des Wickelelements (16) befestigt ist.

## Claims

1. Liquid filter, in particular for cleaning fuel, having a housing which receives a filter insert and comprises a cup-shaped housing part and a lid on which there are disposed the ports for inflow and outflow, and in which the filter insert is configured as a winding element having a middle pipe which is positioned in the interior of the housing between the two ports, the middle pipe forming a seal between the dirt side and clean side, characterized in that in the lid (13) there is disposed a connecting stopper (18, 61, 71, 81) made from elastic material, which connecting stopper exhibits outwardly pointing openings (25, 26) for connecting the inflow (42) and outflow (33) and seals the interior (15) of the housing (11) in the outward direction, in that the middle pipe (17, 63) is connected to a portion (27) of the connecting stopper (18, 61, 71, 81) jutting into the interior (15) of the housing (11) and thereupon forms the seal (39), and in that in the connecting stopper (18, 61, 71, 81) there are disposed ducts (43, 34), which connect the two ports for inflow (42) and outflow (33) to the dirt (41) and clean side (35), respectively, in the interior (15).

2. Liquid filter according to Claim 1, characterized in that rubber is used as the elastic material for the connecting stopper (18, 61, 71, 81).

3. Liquid filter according to Claim 1, characterized in that a relatively soft plastic, especially Viton, is used as the elastic material for the connecting stopper.

4. Liquid filter according to one of Claims 1 to 3, characterized in that the duct (34) connecting the outflow-opening (26) to the clean side (35) is configured as a straight-running pass-through bore (31) interconnecting the two end faces (24, 29) of the connecting stopper (18, 61, 71, 81).

5. Liquid filter according to one of Claims 1 to 4, characterized in that the duct (43) connecting the inflow-opening (25) to the dirt side (41) runs angularly in the connecting stopper (18, 61, 71, 81) and exhibits, in particular, a blindhole-like longitudinal bore (36) running to the inflow-opening (25) and a radial bore (37) running in the cylindrical portion (27) into the contacting surface (38) of the latter.

6. Liquid filter according to Claim 5, characterized in that the radial bore (37) emerges between the lid-fastening (19, 21, 22) and the seal (39) into the contacting surface (38).

7. Liquid filter according to Claim 5 or 6, characterized in that the radial bore (37) runs into an annular groove (83) in the cylindrical portion (27), which annular groove is open in the direction of the contacting surface (38), and the middle pipe (17) exhibits a plurality of assigned pass-through openings (44).

8. Liquid filter according to one or more of Claims 1 to 7, characterized in that the connecting stopper (18, 61, 71, 81) exhibits an outer annular groove (19) with which it is inserted into a central opening (21), having a rounded rim (22), in the lid (13).

9. Liquid filter according to Claim 8, characterized in that the connecting socket (18, 61) is configured such that it tapers conically from the annular groove (19) in the direction of the end face (24) which exhibits openings (25, 26).

10. Liquid filter according to one of Claims 1 to 9, characterized in that the connecting socket (18, 61, 71, 81), at its portion (27) jutting into the housing interior (15), is cylindrically configured and exhibits a shoulder (28) supporting the middle pipe (17, 63).

11. Liquid filter according to one or more of Claims 1 to 10, characterized in that into the axially running bores (36, 31) of the connecting stopper there are inserted pipe sockets (40, 32), which slightly pretension, in particular, the connecting stopper (18, 61, 71).

12. Liquid filter according to one of Claims 1 to 11, characterized in that the outer diameters of the middle pipe (17, 63) and connecting stopper (18, 61, 71) are essentially equally large and, in particular, measure at least three times the diameter of a duct (43, 34).

13. Liquid filter according to one of Claims 5 to 12, characterized in that the radial bore (37) in the connecting stopper (18, 71, 81) is disposed within the middle pipe (17) and the middle pipe (17) exhibits an assigned passage (44) to the dirt side (41), and in that in the interior (15) there is disposed a protective sleeve (49) which protects the winding insert (16) under crash conditions and surrounds it in a pressure-medium-tight manner, which protective sleeve is fastened in a seal-tight manner to the cylindrical portion (27) of the connecting stopper (18, 71, 81) in the region between the lid (13) and radial bore (37).

14. Liquid filter according to Claim 13, characterized in that the protective sleeve (49) consists of a tear-resistant, flexible, foil-like plastics material and is fastened by sticking, bonding or clamping, in a seal-tight and fixed manner, to the middle pipe (17).

15. Liquid filter according to Claim 13, characterized in that the protective sleeve (49) exhibits a top part (82) forming an integral part configured in one piece with the connecting stopper (81), which integral part engages over the winding element (16) in a cap shape and is fastened by its outer rim, in a seal-tight and fixed manner, to an outer pipe (53) of the winding element (16).

## Revendications

1. Filtre à liquide, en particulier filtre d'épuration de carburant, comprenant un boîtier contenant un élément filtrant et constitué d'un corps en forme de récipient coiffé par un couvercle sur lequel sont montés les raccordements d'entrée et de sortie, l'élément filtrant du type à enroulement sur un tube central étant monté à l'intérieur du boîtier entre les deux raccordements, le tube central constituant une zone d'étanchéité entre le côté non purifié et le côté purifié, caractérisé en ce que :
- dans le couvercle (13) est monté un bouchon de raccordement (18, 61, 71, 81) en matériau élastique, percé d'ouvertures vers l'extérieur (25, 26) pour raccordement à l'amenée (42) et à la sortie (33) du carburant, et assurant l'étanchéité vis-à-vis de l'extérieur du volume intérieur (15) du boîtier (11),
- le tube central (17, 63) est raccordé à une partie (27) du bouchon (18, 61, 71, 81) pénétrant dans le volume intérieur (15) du boîtier (11) et créant ainsi la zone d'étanchéité (39),
- le bouchon (18, 61, 71, 81) est percé de canaux (43, 34) permettant de relier l'amenée (42) et la sortie (33) respectivement au côté non épuré (41) et au côté épuré (35), du volume intérieur (15).

2. Filtre selon la revendication 1, caractérisé en ce que le matériau élastique utilisé pour réaliser le bouchon (18, 61, 71, 81) est du caoutchouc.

3. Filtre selon la revendication 1, caractérisé en ce que le matériau élastique utilisé pour réaliser le bouchon est une matière plastique relativement molle, en particulier du viton.

4. Filtre selon une des revendications 1 à 3, caractérisé en ce que le canal (34) reliant l'ouverture de sortie (26) au côté épuré (35) est constitué par un alésage traversant rectiligne (31) reliant les deux faces frontales (24, 29) du bouchon (18, 61, 71, 81).

5. Filtre selon une des revendications 1 à 4, caractérisé en ce que le canal (43) reliant l'ouverture d'entrée (25) au côté non épuré (41) est coudé à l'intérieur du bouchon (18, 61, 71, 81) et notamment comporte un alésage longitudinal (36) borgne aboutissant à l'ouverture (25) et un alésage radial (37) débouchant sur la surface enveloppe (38) dans la partie cylindrique (27) du bouchon.

6. Filtre selon la revendication 5, caractérisé en ce que l'alésage radial (37) débouche à la surface (38) entre la fixation (19, 21, 22) du couvercle et la zone d'étanchéité (39).

7. Filtre selon la revendication 5 ou 6, caractérisé en ce que l'alésage radial (37) débouche dans une rainure annulaire (83) creusée dans la surface enveloppe (38) de la partie cylindrique (27), le tube central (17) étant percé de plusieurs ouvertures de passage (44) en correspondance avec la rainure.

8. Filtre selon une ou plusieurs des revendications 1 à 7, caractérisé en ce que le bouchon de raccordement (18, 61, 71, 81) présente une rainure annulaire externe (19) par laquelle il est engagé dans l'ouverture centrale (21) à bord arrondi (22) du couvercle (13).

9. Filtre selon la revendication 8, caractérisé en ce que le bouchon de raccordement (18, 61) a la forme d'un tronc de cône allant en diminuant de la rainure annulaire (19) à la face frontale (24) portant les ouvertures (25, 26).

10. Filtre selon une des revendications 1 à 9, caractérisé en ce que le bouchon de raccordement (18, 61, 71, 81), dans sa partie (27) pénétrant dans le volume intérieur (15) du boîtier a une forme cylindrique et présente un épaulement (28) servant d'appui au tube central (17, 63).

11. Filtre selon une des revendications 1 à 10, caractérisé en ce que dans les alésages axiaux (36, 31) du bouchon, sont engagées des tubulures (40, 42) qui mettent notamment le bouchon (18, 61, 71) en légère tension.

12. Filtre selon une des revendications 1 à 11, caractérisé en ce que les diamètres externes du tube central (17, 63) et du bouchon (18, 61, 71) sont sensiblement égaux et notamment au moins le triple du diamètre d'un canal (43, 44).

13. Filtre selon une des revendications 5 à 12, caractérisé en ce que l'alésage radial (37) du bouchon (18, 71, 81) se trouve à l'intérieur du tube central (17) qui présente un passage (44) en correspondance avec le côté non épuré, le volume interne (15) contenant une enveloppe de protection (49) de l'élément filtrant (16) dans les conditions du crash, étanche au liquide sous pression est fixée avec étanchéité sur la partie cylindrique (27) du bouchon (18, 71, 81) entre le couvercle (13) et l'alésage radial (37).

14. Filtre selon la revendication 13, caractérisé en ce que l'enveloppe de protection (49) est constituée d'une matière plastique résistante à l'arrachement, flexible sous forme de feuille et par collage, soudage ou par serrage est fixée étanche et rigide au tube central (17).

15. Filtre selon la revendication 13, caractérisé en ce que l'enveloppe de protection (49) présente une partie supérieure (82) qui forme une pièce intégrale exécutée en une seule partie avec le bouchon de raccordement (81), en saisissant par le haut en forme de coiffe l'élément filtrant (16) et est fixée étanche et rigide par son bord extérieur au tube interne (53) de l'élément filtrant (16).
